Europäisches Patentamt

European Patent Office

Office européen des brevets

(11) Publication number: **0 158 172**
**A2**

(12) **EUROPEAN PATENT APPLICATION**

(21) Application number: **85103201.1**

(22) Date of filing: **19.03.85**

(51) Int. Cl.⁴: **G 01 M 11/02**

(30) Priority: **11.04.84 US 600251**

(43) Date of publication of application:
**16.10.85 Bulletin 85/42**

(84) Designated Contracting States:
**DE FR GB IT**

(71) Applicant: **THE PERKIN-ELMER CORPORATION**
**Main Avenue**
**Norwalk Connecticut 06856(US)**

(72) Inventor: **Marshall, Hamilton W., Jr.**
**59 Sherman Turnpike Box 57**
**Redding Connecticut 06875(US)**

(72) Inventor: **Hirst, George E.**
**5305 Strasbourg**
**Irvine California 92714(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Testing of arbitrary optical surfaces.**

(57) Disclosed is a system and a method in which a diffraction grating is used which is circularly ruled to diffract a beam with a wavefront comparable with the expected wavefront reflected from an optic under test so that when beams having well defined wavefronts are directed to the grating (reference) and to the test optic, their return beams may be compared by conventional inter-ferometer techniques. No attempt is made to modify the return beam from the test optic into conventional well known wavefronts such as spherical or parallel for testing purposes.

FIG. 2

-1-

TESTING OF ARBITRARY OPTICAL SURFACES

## BACKGROUND OF THE INVENTION

### FIELD OF THE INVENTION

This invention relates to a method and apparatus for testing optical surfaces and, in particular, to a method and apparatus for testing optical surfaces which generate an arbitrary wavefront peculiar to its surface characteristics.

### THE PRIOR ART

A conventional method of testing complex optical surfaces is the so-called null method in which the wavefront from the object under test is forced into a well behaved wavefront, such as a planar wavefront, which is then compared to a reference beam having the same wavefront and tested using conventional interferometric techniques.

To understand the prior systems better, attention is directed to the prior art systems depicted in Figures la and lb. In Figure la the prior art apparatus 10 is one in which the null method of testing the optic 12, in this instance a ellipsoid, may be accomplished. The system comprises a source of monochromatic light focused and filtered by a spatial filter through a focal point 14, as the primary light source a cube beam splitter 16, a ruled circular transmission diffraction grating, or null lens, 18 between the beam splitter 16 and the test optic 12, and a reference optic, reflective surface 20, in this instance, a concave sphere. The sphere is, of course, easy to produce to a very high precision. Spherical beam 22 diverges from the focal point 14, toward the beam splitter 16 where the beam is split into two beams, 22a and 22b; one directed through the diffraction grating 18 to the test optic 12 and the other directed toward the reference optic 20. The beam 22b, directed toward the test optic, is modified by diffraction at the grating or null lens 18 so that each ray from the grating will strike the test optic normal to its surface. This is also true, of course, with each ray of beam 22a striking the reference surf 20. Thus, as directed, the rays of both beams will return along the same path. The reflected beam from the test optic 12 will again be modified by diffraction at the grating 18 where it will again produce a spherical wavefront. Thus, the reflected wavefront from the spherical reference surface 20 and the now second time diffracted wavefront from the test optic 12 are btoh spherical and directed toward the beam splitter 16. The beams recombine at the beam splitter 16 and then converge to a focal point 24 and diverge therefrom where they may be compared and viewed on a suitable viewing device, such as screen 26. The spherical wavefront of both beams are represented as curves 28

0158172

where they may be compared and viewed on a suitable viewing device, such as screen 26. The spherical wavefront of both beams are represented as curves 28 and any deviation from the spherical will show up as fringes on the screen 26 since the reference beam and the test beam have been configured to have the same wavefront when reflected back to the beam splitter.

Although the case of a spherical beam 22 for the initial beam has been described, in a similar way, a parallel beam with a flat wavefront could be used for an initial beam.

Additionally, a system comprising two initial plane wavefronts may be used to compare a cylindrical optic (mirror) with a suitably matched cylindrical reference diffraction grating.

It is understood that the grating 18 may be replaced with a nulling lens system.

This null method is especially unsuitable for the testing of all ellipsoids of revolution because an ellipsoid has no well behaved wavefront except for light going through its focii. The deformation of a spherical wavefront emanating from a quasi center of curvature is also very difficult when one must take into account a beam splitter.

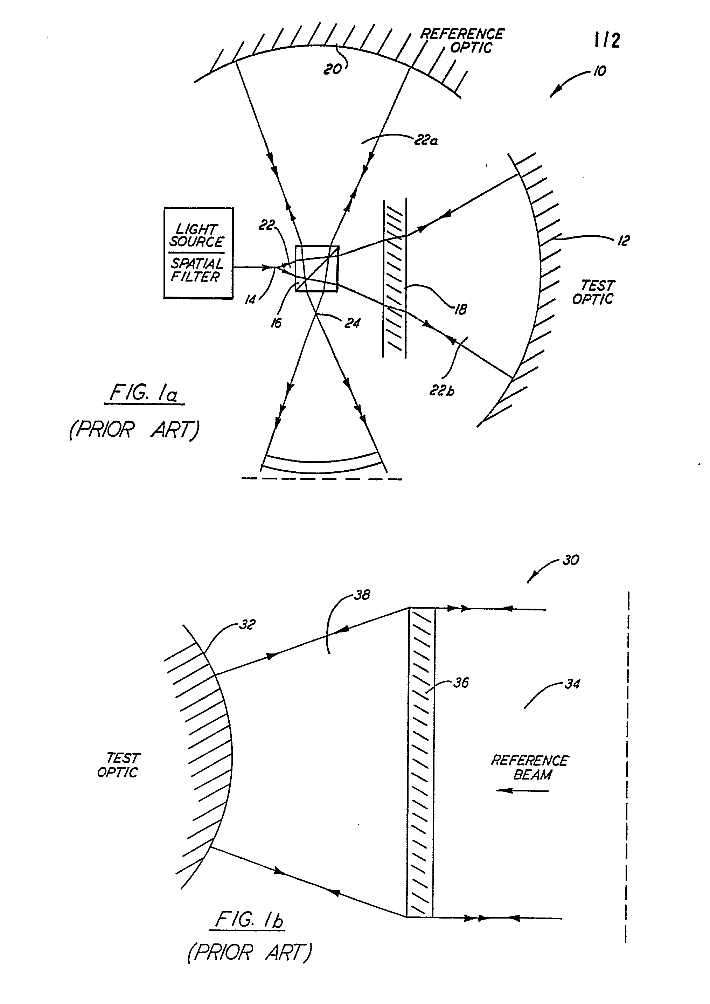

Figure 1b illustrates still another prior art system 30 in which the null method of testing an optic 32 is utilized.

This system comprises a source of monochromatic light 34 which is a well defined reference wavefront, which is directed to a transmission diffraction grating 36 which directs a diffracted beam toward the test optic 32. Again, this grating, like the grating of Figure 1, diffracts the beam 38 so that each ray is directed normal to the test optic 32 and each ray will return exactly along the same path where the beam is again diffracted by the diffraction grating 36 to produce a planar wavefront. This return wavefront is then compared (interferes) with the reference wavefront, and is directed back to an interferometer (not shown) where the fringe patterns are displayed.

In this apparatus, like the apparatus of Figure 1b, the grating 36 may be replaced with a nulling lens system.

In both of the foregoing systems, the wavefront from the test optic must be re-configured to conform to standardized wavefront, spherical or planar, in order to generate useful fringe patterns.

It is an object of this invention to provide a method and apparatus which allows the testing of any arbitrary optical surface without forcing the wavefront emanating from the optic under test into a well-known wavefront before wavefronts can be compared and the testing completed.

## SUMMARY OF THE INVENTION

The invention which meets the foregoing object comprises a system and the method practiced therein in which a reference diffraction grating is used which is circularly ruled to produce a wavefront comparable with the expected wavefront reflected from an optic under test so that when beams having well defined wavefronts are directed to the grating and to the test optic their return beams may be compared by conventional interferometer techniques. In the example, the well defined beams are formed by directing a well defined spherical wavefront beam through a beam splitter to direct one spherical wavefront beam to the test optic and the other to the grating. The beams, one, having the particular characteristic of the surface of the test optic and, the other, having the character of the diffractive characteristics of the grating, are again recombined by the beam splitter and directed to a screen to be compared.

Other and additional advantages of this invention will be apparent to those skilled in the art after having studied the following Detailed Description and accompanying drawings therein.

## BRIEF DESCRIPTION OF THE DRAWINGS

Figure la illustrates the above described prior art null method of testing an optic,

Figure lb illustrates another prior art null method of testing an optic as above described,

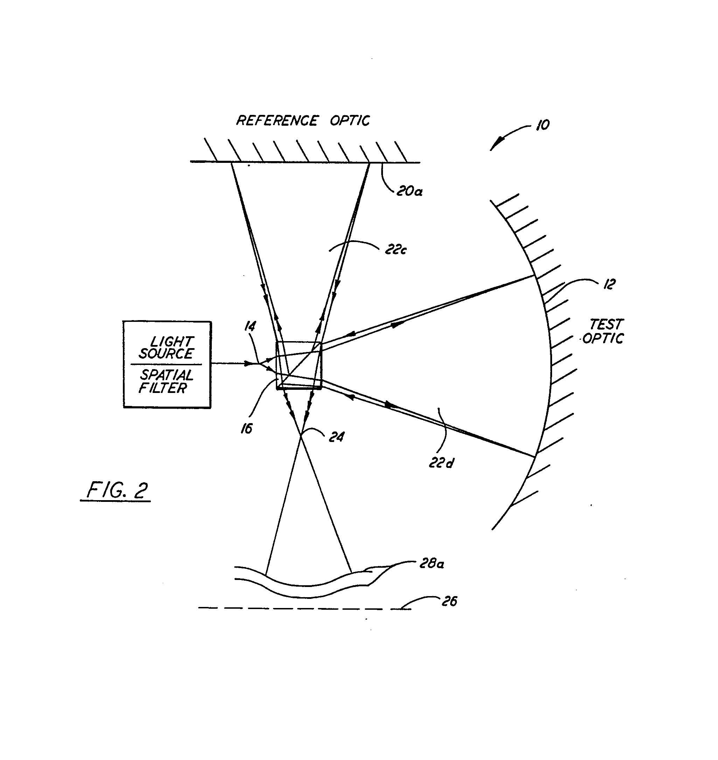

Figure 2 is an illustration of the invention using a reference grating to generate a wavefront similar to the wavefront generated by the optic under test which eliminates the problems involved in deforming the wavefront from the test object into a standardized wavefront in order to form fringe patterns.

## DETAILED DESCRIPTION

Turning now to Figure 2 which illustrates the method and apparatus of this invention wherein the entire apparatus is again depicted as 10 and which is similar to the test system of Figure la except that the transmission grating 18, or a nulling lens system as the case may be, has been omitted, and the reference optic sphere 20, in Figure la, has been replaced with a circular diffraction grating 20a. (Suffix a denotes the difference between the two components in Figure la and 2.) As in Figure la, there is provided a test optic 12 which will generate a return wavefront peculiar to its surface characteristics, a monochromatic light source suitably focused and filtered

0158172

to a point 14 from which it diverges as a beam 22
which is directed to cube beam splitter 16. Beam
splitter 16 splits the beam 22 into two parts--one,
a beam 22c which is directed to the reference optic 20a,
the circularly ruled diffraction grating, and a second
beam 22d directed to the test object 12. The diverging
beams from the beam splitter have been given different
suffixes then those used in Figure 1a to denote a
different type of wavefront reflected back from the
test optic, thus, in this system, beam 22d emanating
from the beam splitter is directed to the test optic
without an intervening optic, such as the transmission
grating 18 of Figure 1a, so that its rays are not specifically
directed normal to the surface of the test optic and the
rays reflected back to the beam splitter do not necessarily
return along the same path but return according to the
wavefront generated by the peculiar characteristics of
the test optic. This is represented by the arrows depicting
the ray trace as they converge toward the beam splitter.

Similarly, the beam 22c, directed toward the reference
optic, with its rays not specifically directed normal to
the grating, returns as a converging ray towards the beam
splitter in the same manner as the wavefront from the
test optic. This is because the reference grating has
been ruled so as to direct a beam which conforms to the
expected wavefront from the test object. Thus, with the
reference grating ruled to generate a wavefront which is the
same as the wavefront from the test object, there is no need to reconfigure the wavefront into a standardized wavefront, such as a spherical or planar wavefront, as in the case of the prior art. Like the prior art, however, both beams are directed by the beam splitter to converge to a region of focus 24 and diverge toward a screen 26 where an interference pattern will be depicted. Identical wavefronts of whatever configuration of the test object and the reference object are depicted as parallel wavefronts 28a in the drawing.

Again, as in Figure 1a, a case of a spherical beam 22a for the initial beam has been described, but in a similar way, a parallel beam with a flat wavefront may be employed for the intitial beam.

The reference optic, the circular diffraction grating, is ruled to diffract a wavefront which corresponds exactly with the wavefront reflected, or expected to be reflected, by the test optic. This is accomplished by the conventional method of computerized ray tracing through the optical system, i.e., through the beam splitter to the test optic, back from the test optic, through the beam splitter to a focal point, storing this information and based on this information, directing a ruling engine to rule a substrate accordingly. The art of computerized ray tracing is setforth in the text entitled "Modern Optical Engineering" by Warren J. Smith, 1966, McGraw-Hill Inc. (Library of Congress, Card No. 66-18214). See the chapters entitled "Optical Computation" discussing computerized ray tracing and, see also the article entitled "Advanced

0158172

Circularly Ruled Gratings for General Surface Metrology"
by Bystricky and Fritz published in the Journal for
the International Society for Optical Engineering,
San Diego Conference Proceedings of August 23 and 24,
1983, Precision Surface Metrology, Volume 429, pages 119
and 125 inclusive.

It is understood, of course, that each diffraction
grating is ruled to match the specific optic under test,
given the focal length information etc., then different
gratings are used to test different test optics.

## What is claimed is:

1.    A method of testing an optical surface comprising the steps of,

providing a pair of beams having well defined initial wavefronts,

providing a circular diffraction reference grating whose rulings will diffract a beam comparable to the reflected beam from the surface under test,

directing one beam towards said grating, directing the second beam toward the surface under test, and

positioning the reference grating and the test object such that the return beams from said reference grating and test object coincide so as to be compared.

2.    A method is claimed in Claim 1 further including the step of providing a beam splitter to form the two beams and to recombine and direct the returned

0158172

beams to a screen where the two return beams may be compared.

3.    A test apparatus for testing an optic having a surface which will generate a wavefront peculiar to its optical geometric characteristics, a reference optic in the form of a circularly ruled grating whose rulings will diffract a beam into a wavefront comparable to that reflected from said optic under test, means for directing a wavefront to said reference optic and said test optic, and means for directing the beams returned from said reference optic and test optic for comparison.

4.    The apparatus as claimed in Claim 3 wherein the means for directing beams to and from the reference object and to and from the test optic is a beam splitter, said beam splitter also directing the returned wavefronts into co-alignment, and means providing a screen for comparing the returned beams.

*FIG. 1a*
(PRIOR ART)

*FIG. 1b*
(PRIOR ART)

REFERENCE OPTIC

10

20a

22c

12

LIGHT
SOURCE

SPATIAL
FILTER

TEST
OPTIC

14

16

24

22d

*FIG. 2*

28a

26